(19) Europäisches Patentamt / European Patent Office / Office européen des brevets

(11) EP 4 212 257 B1

(12) **EUROPEAN PATENT SPECIFICATION**

(45) Date of publication and mention
of the grant of the patent:
**25.02.2026 Bulletin 2026/09**

(21) Application number: **23152107.1**

(22) Date of filing: **17.01.2023**

(51) International Patent Classification (IPC):
**B06B 1/06** *(2006.01)* **G10K 9/125** *(2006.01)*
**G10K 9/20** *(2006.01)*

(52) Cooperative Patent Classification (CPC):
**B06B 1/0618; G10K 9/125; G10K 9/20;** Y02P 10/25

(54) **PISTON TRANSDUCER**

KOLBENWANDLER

TRANSDUCTEUR À PISTON

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.01.2022 GB 202200524**

(43) Date of publication of application:
**19.07.2023 Bulletin 2023/29**

(73) Proprietor: **Thales Holdings UK Plc
Reading, Berkshire RG2 6GF (GB)**

(72) Inventors:
• **ROSE, Hannah**
  **Reading, RG2 6GF (GB)**
• **BOND, Andrew**
  **Reading, RG2 6GF (GB)**
• **ELLIOT, Alan**
  **Reading, RG2 6GF (GB)**

(74) Representative: **Marks & Clerk LLP
15 Fetter Lane
London EC4A 1BW (GB)**

(56) References cited:
EP-A1- 3 432 595     WO-A2-2011/119730
FR-A1- 2 720 585

• JAMES UTAMA SURJADI ET AL: "Mechanical
Metamaterials and Their Engineering
Applications", ADVANCE ENGINEERING
MATERIALS, WILEY VCH VERLAG, WEINHEIM,
DE, vol. 21, no. 3, 4 January 2019 (2019-01-04),
pages n/a, XP072144662, ISSN: 1438-1656, DOI:
10.1002/ADEM.201800864

## Description

FIELD

The disclosure herein relates to acoustic transducers, in particular "tonpilz" piston transducers having a head mass for sonar applications.

BACKGROUND

Piston transducers, in particular "tonpilz" (-acoustic mushroom) piston transducers, project sound in one direction and are suitable for assembling in large close-packed sonar arrays. They can also receive sounds, acting as a hydrophone. Such transducers find wide use in naval and domestic fields due to their effectiveness, simplicity and low cost.

Piston transducers are electro acoustic sensors that sandwich active materials (typically piezoelectric materials) between a light and stiff radiating head mass and a heavy tail mass. The head mass must be both stiff and light, therefore the performance of the piston transducer is limited by available materials and designs. Current head mass designs use materials for the head mass that are too dense, restricting the possible bandwidth of operation. Other designs, in efforts to widen the bandwidth, use materials that lack the required stiffness to give satisfactory acoustic performance, creating unwanted resonances, and lack structural integrity under extreme conditions, for example upon exposure to underwater explosion events.

Thus, there is a continuing need to increase the bandwidth of operation whilst maintaining structural integrity under extreme conditions.

The present disclosure seeks to ameliorate these issues by providing a transducer having wider bandwidth of operation, enhanced performance and resilience to explosive shocks.

An acoustic transmitter is described in WO 2011/119730 A2. The acoustic transmitter includes an acoustic diaphragm configured to transmit acoustic waves into a medium; a piezoelectric actuator assembly configured to deform in an axial direction in response to an applied electrical signal; and a highly incompressible elastic material disposed between the piezoelectric actuator and the acoustic diaphragm and configured to transmit pressure waves to the acoustic diaphragm in response to motion of the piezoelectric actuator.

An electroacoustic transducer is described in EP 3 432 595 A1. The electroacoustic transducer comprises an active element. The electroacoustic transducer comprises an acoustic coupling layer arranged to acoustically couple, in use, the active element to a transmission medium. The electroacoustic transducer further comprises a cavity arranged between the active element and the acoustic coupling layer to receive a fluid.

SUMMARY

According to a first aspect of the present invention, there is provided a piston transducer according to claim 1.

The unit cell may comprise an interconnected network of struts and/or sheets. The struts and or sheets may have a longitudinal axis and be oriented within the head mass so that the longitudinal direction is arranged perpendicular to the active surface of the head mass. The sheet or strut based unit cell may be a BCC, BCCZ, FCC, FCCZ, cubic, Octet-truss or diamond.

The lattice structure may comprise a unit cell of Sheet Gyroid U.

The unit structure may have a relative density of between 0.1 and 0.5.

The lattice structure may comprise a Schoen Gyroid, Schwartz Diamond, neovius surface, Kelvin Cell, cubic, star, octet, hexagonal, or tetrahedron unit cell.

The lattice structure may be oriented such that it is rotated 45 degrees relative to a normal of the active surface.

The relative density of the lattice structure may be non-uniform across the head mass.

The density of the lattice may change across the head mass.

Voids within the lattice structure may contain or be filled with a further material.

According to a second aspect of the present invention, there is provided an array of piston transducers according to the first aspect of the present invention.

According to a third aspect of the present invention, there is provided a method as recited in claim 12.

The active surface of the head mass may also be formed using additive manufacturing. The active surface and the lattice structure may be formed at the same time or sequentially.

The method may further comprise a step of filling or partially filling voids of a unit cell with a material.

The additive manufacturing process may comprise at least one of selective laser melting (SLM), powder bed fusion and direct metal deposition.

The method may further comprise steps of obtaining an electronic file representing a configuration of a product including, a surface configuration or a volume configuration of the product, wherein the product is the head mass; and controlling an additive manufacturing apparatus to manufacture, over one or more additive manufacturing steps, the product according to the surface configuration specified in the electronic file.

According to a fourth aspect of the present invention, there is provided a computer readable medium as recited in claim 18.

BRIEF DESCRIPTION OF DRAWINGS

Embodiments of the invention will now be described by way of example only, with reference to the accompanying drawings in which:

Fig. 1 illustrates a tonpilz piston transducer according to an embodiment;
Fig. 2 illustrates a tonpilz piston transducer according to an embodiment;
Fig. 3(a), (b) and (c) depict a unit cells of a Schoen Gyroid, Schwartz Diamond and neovius structure, respectively;
Fig. 4(a) depicts a unit cell of a body centre cubic (BCC) structure;
Fig. 4(b) depicts a unit cell of a body centre cubic structure having reinforcing struts in a longitudinal (z) direction;
Fig. 4(c) depicts a unit cell of a face centre cubic (FCC) structure;
Fig. 4(d) depicts a unit cell of a face centre cubic structure having reinforcing struts in a longitudinal (z) direction;
Fig. 4(e) depicts a unit cell of a cubic structure;
Fig. 4(f) depicts a unit cell of a Octet-truss structure;
Fig. 4(g) depicts a unit cell of a diamond structure;
Fig. 5 depicts a unit cell of a strut-Gyroid-U structure having a relative density of 0.3;
Fig. 6 shows a unit cell of a sheet-Gyroid-U structure having a relative density of 0.3;
Fig. 7 shows a unit cell of a strut-Gyroid-G1 structure having a continuously varying density from 0.4 to 0.2;
Fig. 8 shows a unit cell of a sheet-Gyroid-G1 structure having a continuously varying density from 0.4 to 0.2;
Fig. 9 shows a unit cell of a strut-Gyroid-G2 structure having a continuously varying density from 0.5 to 0.1;
Fig. 10 shows a unit cell of a sheet-Gyroid-G2 structure having a continuously varying density from 0.5 to 0.1;
Fig. 11 illustrates a tonpilz piston transducer array according to an embodiment.

DETAILED DESCRIPTION

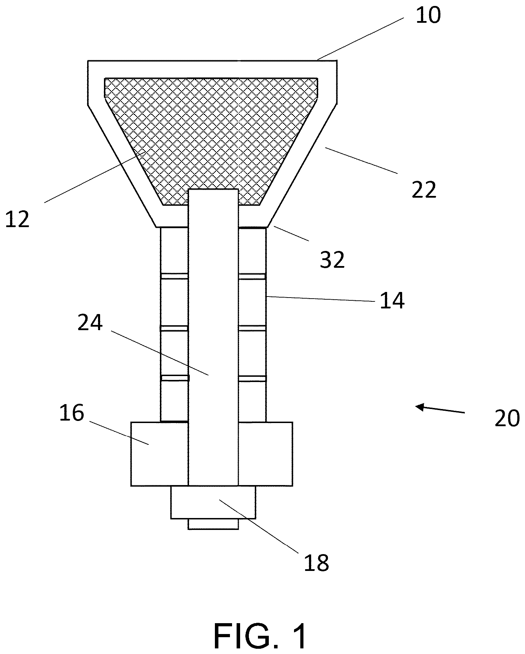

Fig. 1 shows a Tonpilz transducer 20, also referred to herein as a piston transducer 20. The piston transducer 20 is configured to be used under water. The piston transducer 20 comprises a head mass 22 connected to a tail mass 16 via a centre bolt 24. Positioned between the head mass 22 and the tail mass 16 is an active material 14. The active material 14 is described hereafter as a piezoelectric stack 14. In an example useful for understanding the present invention, other suitable materials, e.g. magnetorestrictive materials, are used.

During operation, an alternating voltage is applied to the piezoelectric stack 14 resulting in expansion and contraction of the stack 14 along a poling direction of the piezoelectric stack 14. The poling direction of the stack 14 is parallel to the axis of the centre bolt 24. The expansion and contraction occur at the frequency of the applied voltage.

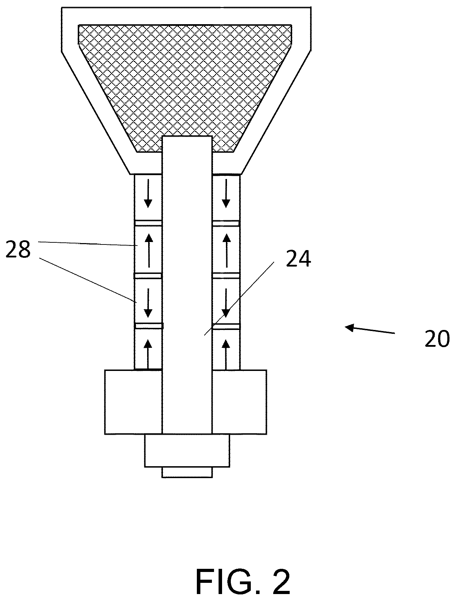

According to the invention, the stack 14 comprises a piezoceramic material. In an example useful for understanding the present invention other suitable materials are used. The stack 14 comprises stacked rings 28 of piezoceramic wherein each consecutive ring has an opposite polarisation direction to the next, as shown by the arrow directions in Fig. 2. The rings 28 encircle the centre bolt 24. The transducer 20 further comprises a fastener 18, for example nut 18, which fastens on to the centre bolt 24, securing the stacked rings 28 and the tail mass 16 relative to the head mass 22.

The expansion and contraction of the stack 14 comprise alternating displacements which are transmitted through the head mass 22. In use, the displacements of the head mass 22 ultimately result in pressure fluctuations, i.e. acoustic waves, in surrounding water. The amplitude of the alternating displacements of the head mass 22, and hence the sound pressure level in the water, is magnified at the resonance frequency of the piezoelectric stack. Therefore, to enhance performance the voltage applied to the stack 14 is typically supplied at a frequency close to the resonance frequency of the piezoelectric stack. For conventional stacks 14 the longitudinal resonance frequency is typically between 1-50kHz.

Since the surface 10 of the head mass 22 is the point of transmission of the acoustic wave to the acoustic medium, i.e. the surrounding water, the surface area of the head mass 22 is maximised by using the mushroom shape shown in Fig. 1 and Fig. 2. The surface 10 is also referred to herein as the active surface 10. Additionally, it is desirable to maximise the amplitude of the displacement of the head mass 22 in a direction normal to the top surface 10 of the head mass 22. To enhance the amplitude of displacement of the head mass surface 10 normal to the active surface 10, the thickness of the head mass surface 10 is minimised and the weight of the head mass 22 is minimised.

However, decreasing the thickness of the head mass surface 10 while increasing the size (and surface area) of the head mass 22 lowers the flexural resonance frequency of the head mass 22. This causes parts of the active surface 10 to move out of phase with the other parts, resulting in unwanted and interfering resonance frequencies.

Thus, it is important that the head mass 22 of the piston transducer has sufficient stiffness so as not to excite higher order modes within the frequency of operation, commonly known as head-flap, whilst also being of low mass. Aluminium alloys are commonly used as a head mass materials but the bandwidth is limited by the density of the material. Other engineering materials with lower densities such as polyether ether ketone (PEEK) do not yield the desired performance.

According to an embodiment, there is a Tonpilz transducer 20 shown in Fig. 1 and Fig. 2 having an internal support structure 12 within the head mass 22.

The support structure 12 comprises a lattice structure. Lattices are topologically ordered, three-dimensional open-celled structures composed of one or more repeating unit cells. Lattice structures have a high strength-to-weight ratio relative to other materials, therefore the lattice structure 12 shown provides enhanced stiffness to the head mass 22 with minimal weight increase compared to a conventional solid head mass.

Thus, the embodiment shown prevents unwanted resonances and increases structural integrity. The head mass 22 shown also has a wider bandwidth compared to conventional transducers. The increased bandwidth can be understood by considering the mechanical quality factor $Q_m$ for the transducer, where $Q_m$ is given by:

$$Q_m \approx \frac{M_h}{R_r}$$

Here, $M_h$ is the mass of the head and $R_r$ is the radiation resistance. The frequency bandwidth of the transducer will generally be inversely proportional to the mechanical quality factor $Q_m$; thus, by reducing the mass $M_h$, it is possible to reduce the quality factor $Q_m$ and in turn increase the bandwidth of the transducer.

The head mass 22 comprises an internal lattice structure 12 containing voids. According to the invention, the voids have lateral dimensions of 0.2mm to 2mm. Voids which are too large may exhibit poor performance under explosive shock conditions when deployed in extreme environments. Typically, the thickness of the walls that define the voids will be of 1mm thickness of above; taking the above dimensions together, the relative density, which is the ratio of the apparent density of the lattice structure ($\rho_*$) to the density of the lattice structure's material ($\rho_s$), may be 25% or above. In embodiments, the lattice structure 12 containing voids is produced using additive manufacturing.

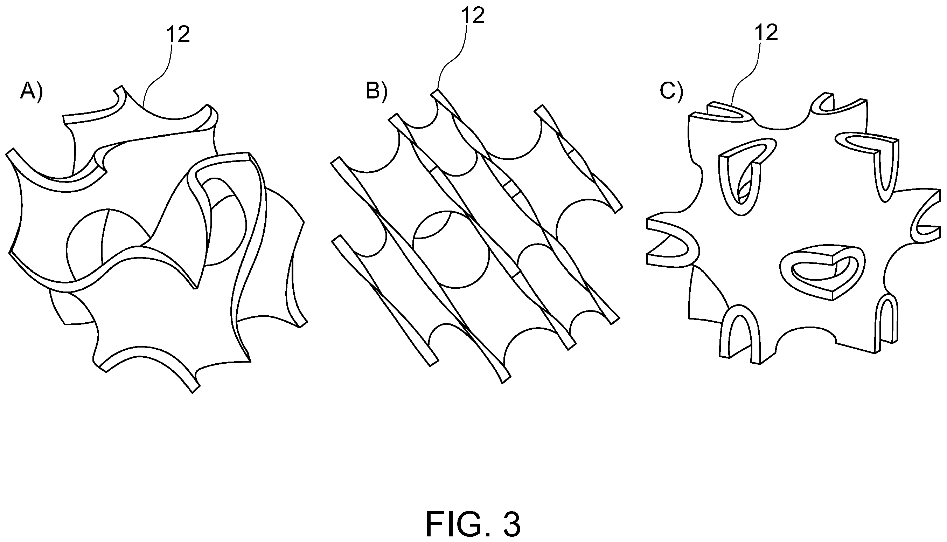

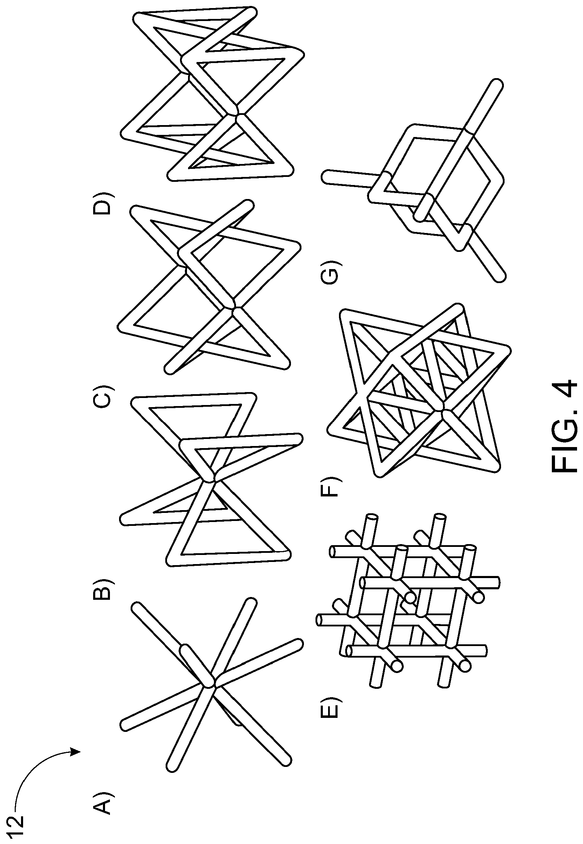

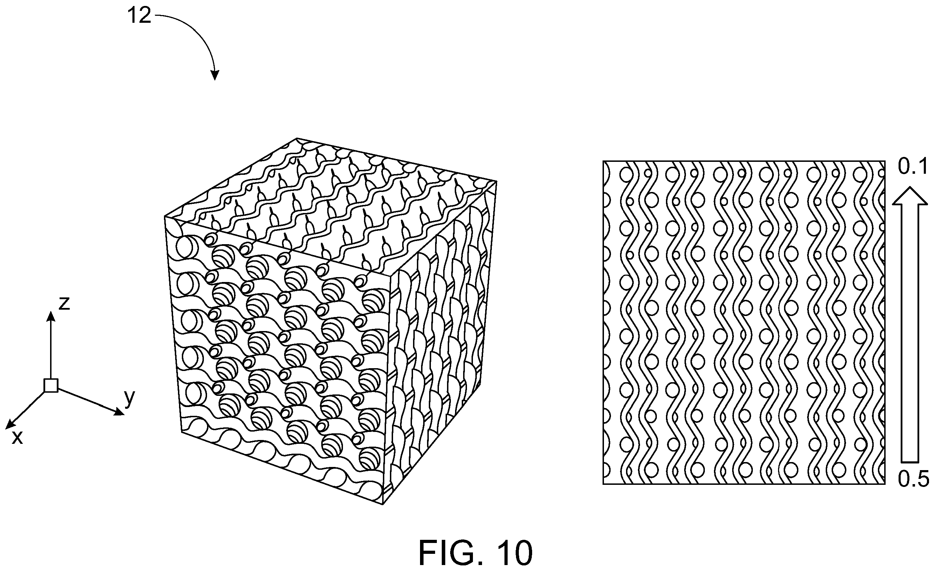

In an embodiment the head mass 22 structure comprises an internal lattice structure according to any of Fig. 3 to Fig. 10. Embodiments include a variety of unit cell types which form a lattice structure within the head mass 22. Embodiments include; Schoen Gyroid, Schwartz Diamond and neovius sructures as shown in Fig. 3 (a), (b) and (c) respectively. Further embodiments include Kelvin Cells, star, octet, hexagonal, tetrahedron unit cells (not shown). Fig. 4 (a) - (g) show unit cells which are strut based, including; Fig. 4(a) body centre cubic (BCC), Fig. 4(b) body centre cubic having reinforcing struts in the z direction (BCCZ), Fig. 4(c) face centre cubic (FCC), Fig. 4(d) face centre cubic having reinforcing struts in the z direction (FCCZ), Fig. 4(e) cubic, Fig. 4(e) Octet-truss, and Fig. 4(g) diamond. In addition to the unit cell types described it is also possible to use stochastic unit cells to produce a more organic, foam like structure, mimicking natural lattice structures.

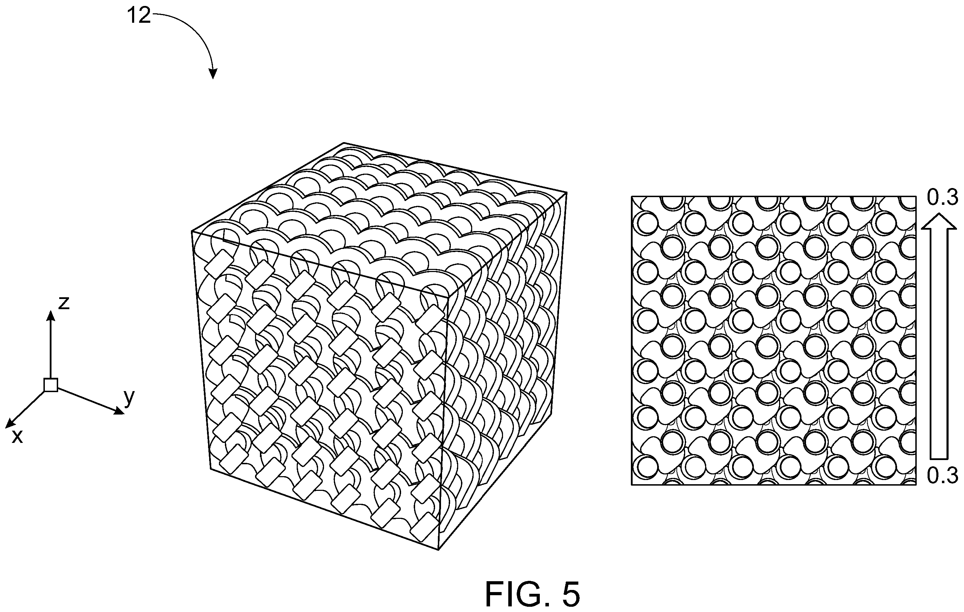

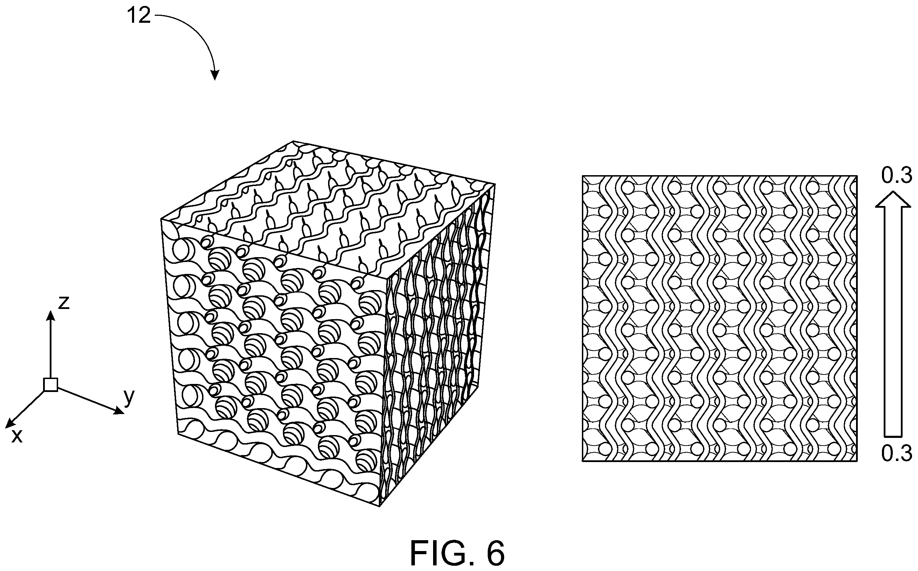

The described unit cells comprise an interconnected network of struts and or sheets. The orientation of unit cells with respect to loading direction significantly affects the mechanical response of the lattice structures. As shown in Fig. 5 to Fig. 10, the unit cell comprises a three-dimensional structure having x, y and z-axes. In use the z-axis, or the longitudinal axis, of the unit cell extends normal to the active surface 10 of the head mass 22. Unit cells having struts that extend in the z direction provide increased stiffness to loading in the z direction, which in use, is the direction perpendicular to the active surface 10 i.e. the direction in which the centre bolt 24 shown in Figure 1 extends between the head mass 22 and the tail mass 16. Therefore, use of unit cells oriented with the struts perpendicular to the active surface are particularly suitable for providing high stiffness perpendicular to the surface 10 of the head mass. Unit cells having struts that extend in the z direction and oriented such that the z direction is perpendicular to the active surface 10 also provide enhanced structural integrity even when the direction of a shock wave, for example from an explosion, is not normal to the front face. Thus, unit cells such as cubic, BCCZ, FCCZ, which have reinforcing struts in a longitudinal (z) direction, may be used in some embodiments (it will be appreciated that the unit cells may provide stiffness in all directions, and not just in the z direction). Lattice geometries such as the Sheet Gyroid U (Fig. 6), Schoen Gyroid (Fig. 3(a)) and Schwartz diamond (Fig. 3(b)) are also intended. In some embodiments, lattice structures such as the Sheet Gyroid U (Fig. 6), Schoen Gyroid (Fig. 3(a)) and Schwartz diamond (Fig. 3(b)) are oriented such that the lattice structure is rotated 45 degrees, and the struts or sheets are orientated along the length of the head mass 22 (from the active surface 10 toward the base 32) to provide the required structural properties.

Fig. 5 to Fig. 10 show embodiments having an open cell lattice sheet and strut based Gyroid structures 12. Fig. 5 depicts a unit cell of a strut-Gyroid-U structure. The relative density of the structure is 0.3. Fig. 6 shows a unit cell of a sheet-Gyroid-U structure having a relative density of 0.3. The Sheet-Gyroid-U structure is the most isotropic of the examples in Fig. 5 to Fig. 10 and has the highest Young's modulus, thus it is particularly suitable for resisting underwater explosive shock events.

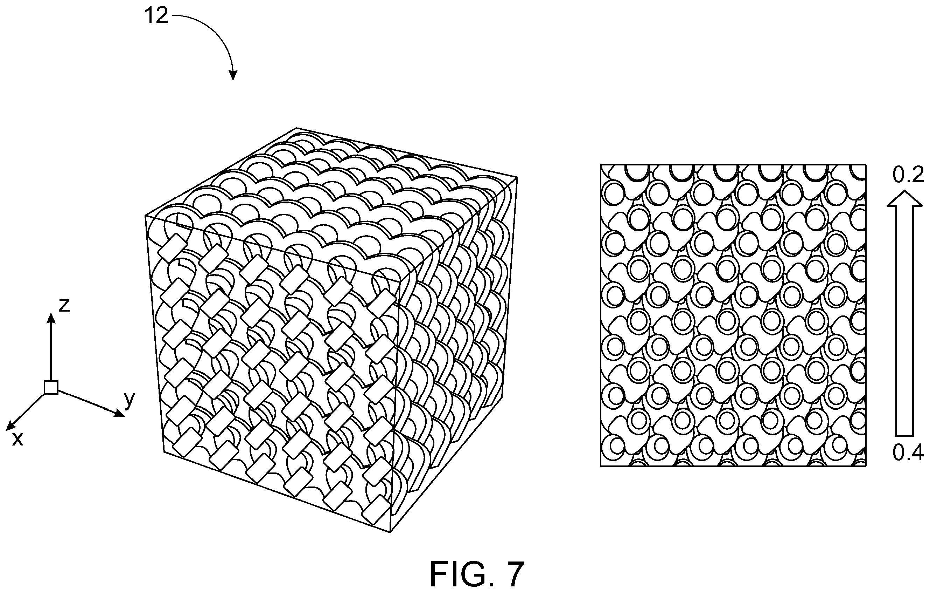

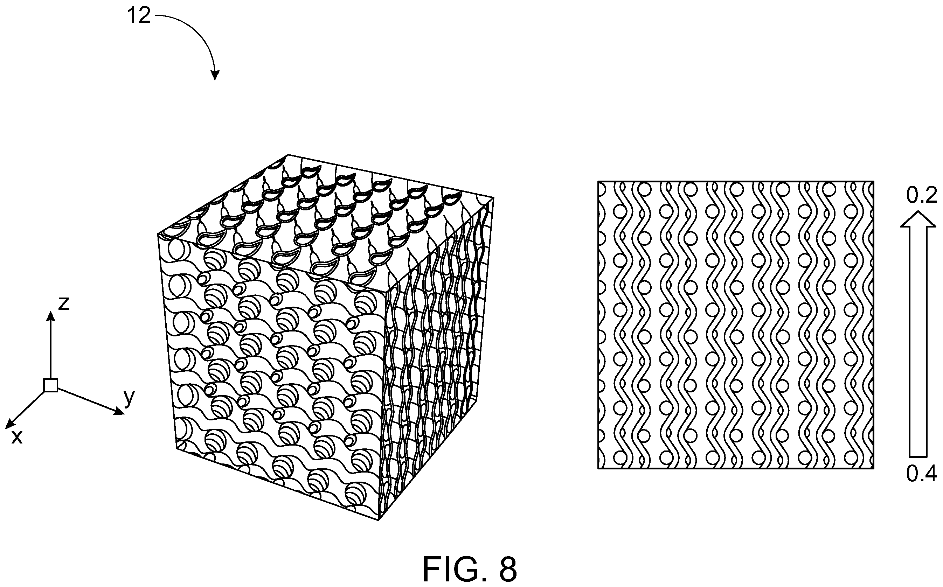

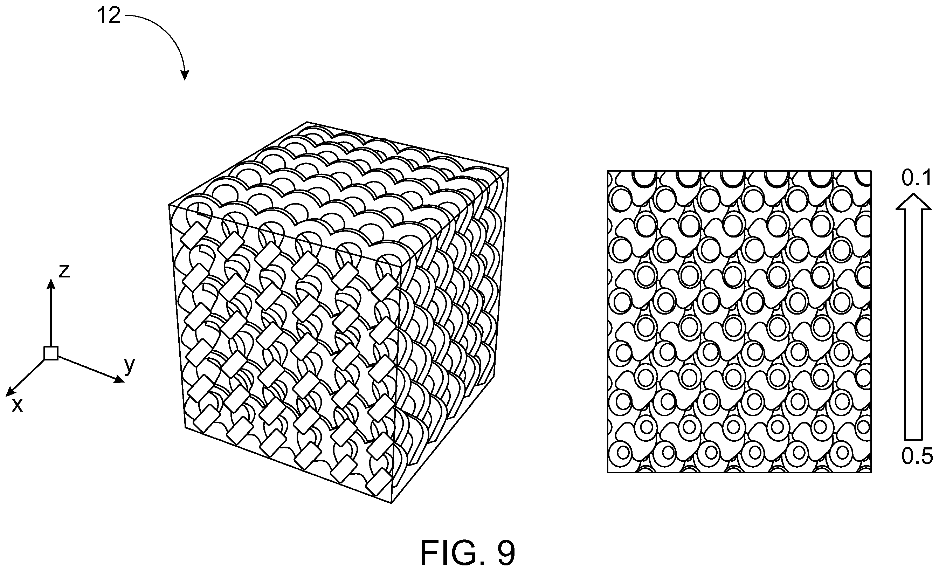

In embodiments, the lattices density is graduated, having a higher density (smaller unit cells) at one end of the head mass 22 and lower relative density at the other end. In some embodiments, the head mass will have a higher density lattice at the water face and lower density at the ceramic end. The change from a higher relative density to a lower relative density may occur gradually through the structure. As shown in Fig. 7, according to an embodiment a unit cell of a strut-Gyroid-G1 structure has a continuously varying relative density from 0.4 to 0.2. Fig. 8 shows a unit cell of a sheet-Gyroid-G1 structure having a continuously varying relative density from 0.4 to 0.2. Fig. 9 shows a unit cell of a strut-gyroid-G2 structure having a continuously varying relative density from 0.5 to 0.1. Fig. 8 shows a unit cell of a sheet-gyroid-G2 structure having a continuously varying relative density from 0.5 to 0.1.

Although just some examples are shown, it will be understood that any structure with a graduated relative density is intended. In some embodiments, the relative density may be higher towards the exterior edges of the head mass, and lower towards the middle of the head mass. The relative density may increase from the middle of the head mass to the point at which the head mass meets the piezoelectric stack.

In some embodiments, the voids created by the lattice 12 are filled with another material to further enhance the structural integrity and aid in survival under explosive shock.

Examples of such a material may include technogel (a polyurethane gel), polyurethane, or silicone. An epoxy such as Araldite may also be used.

According to an embodiment there is provided a method of producing a head mass 22 for a piston transducer 20. The method comprises producing the head mass 22 using additive manufacturing and forming a lattice structure 12 in the head mass 22 using additive manufacturing. In an embodiment, the additive manufacturing method is selected laser sintering. Alternatively, the additive manufacturing method comprises powder bed fusion. Powder bed fusion produces unit cells that are open in nature to allow unused powder to be removed from the resulting part. Other techniques that allow production of a closed cell structure, such as direct metal deposition, are also intended. Historically only large voids were achievable with traditional manufacturing techniques, limiting the ability of the transducer to survive underwater explosive shock events. However the use of voids of the size range 0.2mm to 2mm within the head mass 22 results in a low density transducer head masses 22, wherein struts and/or sheets forming the lattice provide additional support to the head mass, improving performance under extreme conditions such as under water explosive shock events. Materials used for the head mass may include, among others, aluminium or alloys thereof, Titanium or alloys thereof, stainless steel and brass.

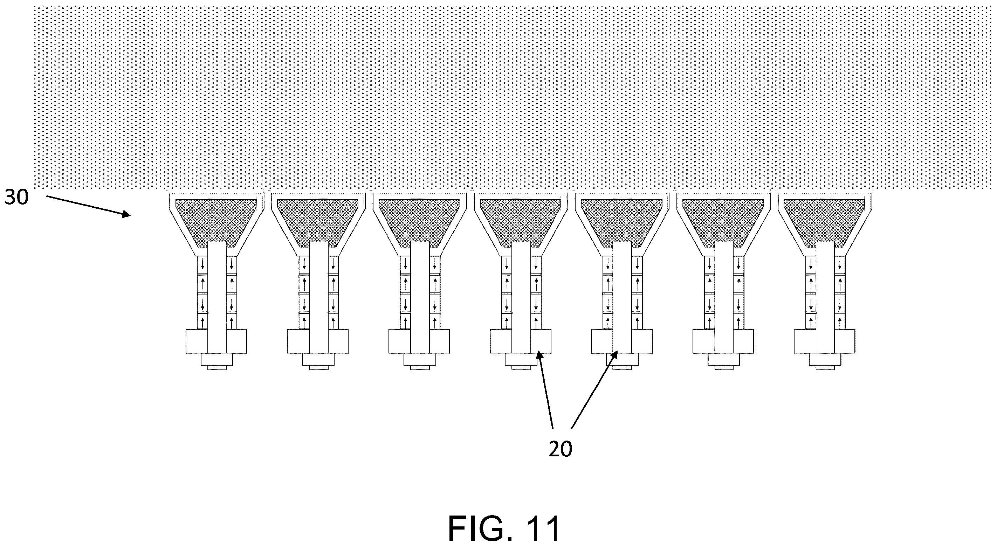

The enhanced Tonpilz transducer 20, according to the embodiments described, can also be used to generate high acoustic power by compact means within sonar arrays 30 as shown in Fig. 11. Such a configuration can produce high intensity and directional acoustic waves, which is extremely important in most sonar applications. Other array formations are also possible. For example, the transducers 20 may be arranged to form a linear or planar array of transducers, a cylindrical array or spherical array.

Although specific configurations of piston transducer 20 are described, the voided head mass 22 could be used for any piston transducer system.

It is also to be appreciated that the present invention may be partially or fully produced using other manufacturing techniques, for example by using additive manufacturing processes. Accordingly, the present invention not only includes products or components as described herein, but also methods of manufacturing such products or components, such as via injection moulding or additive manufacturing techniques, along with the computer software, firmware or hardware for controlling the manufacture of such products via injection moulding or additive manufacturing techniques.

The structure of one or more parts of the product may be represented digitally in the form of a design file. A design file, for example a computer aided design (CAD) file, is a configuration file that encodes one or more of the surface or volumetric configuration of the shape of the product. That is, a design file represents the geometrical arrangement or shape of the product. Once obtained, a design file may be converted into a set of computer executable instructions that, once executed by a processer, cause the processor to control an additive manufacturing apparatus to produce a product according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process. The formation may be through deposition, through sintering, or through any other form of additive manufacturing method.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the product that can be used to physically generate the object, upon execution of the code or instructions by an additive manufacturing system. For example, the instructions may include a precisely defined 3D model of the product and can be generated from any of a large variety of well-known computer aided design (CAD) software systems such as AutoCAD®, TurboCAD®, DesignCAD 3D Max, etc. Alternatively, a model or prototype of the component may be scanned to determine the three-dimensional information of the component.

Accordingly, by controlling an additive manufacturing apparatus according to the computer executable instructions, the additive manufacturing apparatus can be instructed to print out one or more parts of the product. These can be printed either in assembled or unassembled form. For instance, different sections of the product may be printed separately (as a kit of unassembled parts) and then subsequently assembled. Alternatively, the different parts may be printed in assembled form.

In light of the above, embodiments include methods of manufacture via additive manufacturing. This includes the steps of obtaining a design file representing the product and instructing an additive manufacturing apparatus to manufacture the product in assembled or unassembled form according to the design file. The additive manufacturing apparatus may include a processor that is configured to automatically convert the design file into computer executable instructions for controlling the manufacture of the product. In these embodiments, the design file itself can automatically cause the production of the product once input into the additive manufacturing device. Accordingly, in this embodiment, the design file itself may be considered computer executable instructions that cause the additive manufacturing apparatus to manufacture the product. Alternatively, the design file may be converted into instructions by an external computing system, with the resulting computer executable instructions being provided to the additive manufacturing device.

Although additive manufacturing technology is described herein as enabling fabrication of complex objects by building objects point-by-point, layer-by-layer, typically in a vertical direction, other methods of fabrication are possible and within the scope of the present subject matter. For example, although the discussion herein refers to the addition of material to form successive layers, one skilled in the art will appreciate that the methods and structures disclosed herein may be practiced with any additive manufacturing technique or other manufacturing technology.

The present invention has been described above purely by way of example. Modifications in detail may be made to the present invention within the scope of the claims as appended hereto. Furthermore, it will be understood that the invention is in no way to be limited to the combination of features shown in the examples described herein. Features disclosed in relation to one example can be combined with features disclosed in relation to a further example.

**Claims**

1. A piston transducer (20) for sonar applications, the piston transducer (20) comprising:

   a head mass (22), wherein the head mass (22) comprises:

   an active surface (10) for transmitting and/or receiving ultrasound waves; and
   an internal lattice structure (12) to structurally support the head mass (22), wherein the lattice structure comprises an organised structure of repeating unit cells,

   a tail mass (16) connected to the head mass (22) via a centre bolt (24); and
stacked rings (28) of piezoceramic positioned between the head mass (22) and the tail mass (16), wherein each consecutive ring has an opposite polarisation direction to the next, and wherein the rings (28) encircle the centre bolt (24),
**characterised in that**
the lattice structure contains voids having lateral dimensions of 0.2mm to 2mm.

2. The piston transducer (20) according to claim 1, wherein the unit cell comprises an interconnected network of struts and/or sheets.

3. The piston transducer (20) according to claim 2, wherein the struts and or sheets have a longitudinal axis and are oriented within the head mass (22) so that the longitudinal direction is arranged perpendicular to the active surface (10) of the head mass (22).

4. The piston transducer (20) according to claim 2 or claim 3, wherein the sheet or strut based unit cell is a BCC, BCCZ, FCC, FCCZ, cubic, Octet-truss or diamond or wherein the lattice structure comprises a unit cell of Sheet Gyroid U.

5. The piston transducer (20) of claim 4, wherein the unit structure has a relative density of between 0.1 and 0.5.

6. The piston transducer (20) according to claim 1, wherein the lattice structure comprises a Schoen Gyroid, Schwartz Diamond, neovius surface, Kelvin Cell, cubic, star, octet, hexagonal, or tetrahedron unit cell.

7. The piston transducer (20) of any of claims 4 to 6, wherein the lattice structure is oriented such that it is rotated 45 degrees relative to a normal of the active surface (10).

8. The piston transducer (20) of any preceding claim, wherein the relative density of the lattice structure is non-uniform across the head mass (22).

9. The piston transducer (20) of claim 8, wherein the density of the lattice changes across the head mass (22).

10. The piston transducer (20) of any preceding claim, wherein the voids within the lattice structure contain or are filled with a further material.

11. An array (30) of piston transducers (20), wherein each piston transducer (20) comprises the features of any of claims 1 to claim 10.

**12.** A method of producing the piston transducer (20) according to any of claims 1 to 10, the method comprising:

> forming the head mass active surface (10), and forming the lattice structure using additive manufacturing.

**13.** The method of claim 12, wherein the active surface (10) of the head mass (22) is also formed using additive manufacturing.

**14.** The method of claim 13, wherein the active surface (10) and the lattice structure are formed at the same time or sequentially.

**15.** The method of claim 14, further comprising a step of filling or partially filling the voids of a unit cell with a material.

**16.** The method of any of claim 12 to claim 15, wherein the additive manufacturing process comprises at least one of selective laser melting (SLM), powder bed fusion and direct metal deposition.

**17.** The method of producing the piston transducer (20) according claim 13, the method further comprising:

> obtaining an electronic file representing a configuration of a product including, a surface configuration or a volume configuration of the product, wherein the product is the head mass; and controlling an additive manufacturing apparatus to manufacture, over one or more additive manufacturing steps, the product according to the surface configuration specified in the electronic file.

**18.** A computer readable medium halving stored thereon computer executable instructions that, when executed by a processor, cause the processor to control an additive manufacturing apparatus or device to manufacture the piston transducer (20) of any one of claims 1 to 10.

**Patentansprüche**

**1.** Kolbenwandler (20) für Sonaranwendungen, wobei der Kolbenwandler (20) Folgendes umfasst:

> eine Kopfmasse (22), wobei die Kopfmasse (22) Folgendes umfasst:
>
>> eine aktive Oberfläche (10) zum Übertragen und/oder Empfangen von Ultraschallwellen; und
>> eine innere Gitterstruktur (12) zum strukturellen Unterstützen der Kopfmasse (22), wobei die Gitterstruktur eine geordnete Struktur aus sich wiederholenden Einheitszellen umfasst, eine Heckmasse (16), die über einen zentralen Bolzen (24) mit der Kopfmasse (22) verbunden ist; und gestapelte Ringe (28) aus Piezokeramik, die zwischen der Kopfmasse (22) und der Heckmasse (16) positioniert sind, wobei jeder aufeinanderfolgende Ring eine entgegengesetzte Polarisationsrichtung zum nächsten aufweist und wobei die Ringe (28) den zentralen Bolzen (24) umschließen,

**dadurch gekennzeichnet, dass**
die Gitterstruktur Hohlräume, die seitlichen Abmessungen von 0,2 mm bis 2 mm aufweisen, enthält.

**2.** Kolbenwandler (20) nach Anspruch 1, wobei die Einheitszelle ein miteinander verbundenes Netzwerk von Streben und/oder Blechen umfasst.

**3.** Kolbenwandler (20) nach Anspruch 2, wobei die Streben und/oder Bleche eine Längsachse aufweisen und innerhalb der Kopfmasse (22) so ausgerichtet sind, dass die Längsrichtung senkrecht zu der aktiven Oberfläche (10) der Kopfmasse (22) angeordnet ist.

**4.** Kolbenwandler (20) nach Anspruch 2 oder Anspruch 3, wobei die blech- oder strebenbasierte Einheitszelle ein BCC, BCCZ, FCC, FCCZ, kubisches, Oktett-Fachwerk oder Diamant ist oder wobei die Gitterstruktur eine Einheitszelle vom Typ Sheet Gyroid U umfasst.

**5.** Kolbenwandler (20) nach Anspruch 4, wobei die Einheitsstruktur eine relative Dichte zwischen 0,1 und 0,5 aufweist.

**6.** Kolbenwandler (20) nach Anspruch 1, wobei die Gitterstruktur eine Schoen-Gyroid- , Schwartz-Diamant-, Neovius-Oberflächen-, Kelvin-Zelle-, kubische, Stern-, Oktett-, hexagonale oder Tetraeder-Einheitszelle umfasst.

**7.** Kolbenwandler (20) nach einem der Ansprüche 4 bis 6, wobei die Gitterstruktur so ausgerichtet ist, dass sie um 45 Grad relativ zu einer Normalen der aktiven Oberfläche (10) gedreht ist.

**8.** Kolbenwandler (20) nach einem vorstehenden Anspruch, wobei die relative Dichte der Gitterstruktur über die Kopfmasse (22) ungleichmäßig ist.

**9.** Kolbenwandler (20) nach Anspruch 8, wobei sich die Dichte des Gitters über die Kopfmasse (22) ändert.

**10.** Kolbenwandler (20) nach einem vorstehenden Anspruch, wobei die Hohlräume innerhalb der Gitterstruktur ein weiteres Material enthalten oder mit diesem gefüllt sind.

**11.** Anordnung (30) von Kolbenwandlern (20), wobei jeder Kolbenwandler (20) die Merkmale eines der Ansprüche 1 bis 10 aufweist.

**12.** Verfahren zur Herstellung des Kolbenwandlers (20) nach einem der Ansprüche 1 bis 10, wobei das Verfahren Folgendes umfasst:

Bilden der aktiven Oberfläche der Kopfmasse (10) und
Bilden der Gitterstruktur mittels additiver Herstellung.

**13.** Verfahren nach Anspruch 12, wobei die aktive Oberfläche (10) der Kopfmasse (22) ebenfalls mittels additiver Herstellung gebildet wird.

**14.** Verfahren nach Anspruch 13, wobei die aktive Oberfläche (10) und die Gitterstruktur gleichzeitig oder nacheinander gebildet werden.

**15.** Verfahren nach Anspruch 14, ferner umfassend einen Schritt zum Füllen oder teilweisen Füllen der Hohlräume einer Einheitszelle mit einem Material.

**16.** Verfahren nach einem der Ansprüche 12 bis 15, wobei der Prozess zur additive Herstellung mindestens eines von selektivem Laserschmelzen (SLM), Pulverbettfusion und direkter Metallabscheidung umfasst.

**17.** Verfahren zur Herstellung des Kolbenwandlers (20) nach Anspruch 13, wobei das Verfahren ferner Folgendes umfasst:

Erhalten einer elektronischen Datei, die eine Konfiguration eines Produkts darstellt, die eine Oberflächenkonfiguration oder eine Volumenkonfiguration des Produkts beinhaltet, wobei das Produkt die Kopfmasse ist; und
Steuern einer Einrichtung zur additiven Herstellung, um das Produkt in einem oder mehreren additiven Herstellungsschritten entsprechend der in der elektronischen Datei angegebenen Oberflächenkonfiguration herzustellen.

**18.** Computerlesbares Medium, auf dem computerausführbare Anweisungen gespeichert sind, die, wenn sie von einem Prozessor ausgeführt werden, den Prozessor veranlassen, eine Einrichtung oder Vorrichtung zur additiven Herstellung, um den Kolbenwandler (20) nach einem der Ansprüche 1 bis 10 herzustellen, zu steuern.

**Revendications**

**1.** Transducteur à piston (20) pour applications de sonar, le transducteur à piston (20) comprenant :

une masse de tête (22), dans lequel la masse de tête (22) comprend :

une surface active (10) pour la transmission et/ou la réception d'ondes ultrasonores ; et une structure en treillis interne (12) destinée à supporter structurellement la masse de tête (22), dans lequel la structure en treillis comprend une structure organisée de cellules unitaires répétitives,
une masse de queue (16) reliée à la masse de tête (22) par un boulon central (24) ; et des anneaux empilés (28) de piézocéramique positionnés entre la masse de tête (22) et la masse de queue (16), dans lequel chaque anneau consécutif présente une direction de polarisation opposée à celle du suivant, et dans lequel les anneaux (28) entourent le boulon central (24),

**caractérisé en ce que**
la structure en treillis contient des vides dont les dimensions latérales sont de 0,2 mm à 2 mm.

**2.** Transducteur à piston (20) selon la revendication 1, dans lequel la cellule unitaire comprend un réseau interconnecté de montants et/ou de feuilles.

**3.** Transducteur à piston (20) selon la revendication 2, dans lequel les montants et/ou les feuilles présentent un axe longitudinal et sont orientés à l'intérieur de la masse de tête (22) de sorte que la direction longitudinale soit agencée perpendiculairement à la surface active (10) de la masse de tête (22).

**4.** Transducteur à piston (20) selon la revendication 2 ou la revendication 3, dans lequel la cellule unitaire à base de feuilles ou de montants est un diamant ou une armature BCC, BCCZ, FCC, FCCZ, cubique, ou octet ou dans lequel la structure en treillis comprend une cellule unitaire de gyroïde de feuille U.

**5.** Transducteur à piston (20) selon la revendication 4, dans lequel la structure unitaire présente une densité relative comprise entre 0,1 et 0,5.

**6.** Transducteur à piston (20) selon la revendication 1, dans lequel la structure en treillis comprend une cellule unitaire de gyroïde de Schoen, diamant de Schwartz, surface de Neovius, cellule de Kelvin, cubique, étoile, octet, hexagonale ou tétraédrique.

7. Transducteur à piston (20) selon l'une quelconque des revendications 4 à 6, dans lequel la structure en treillis est orientée de telle sorte qu'elle soit tournée de 45 degrés par rapport à une normale de la surface active (10).

8. Transducteur à piston (20) selon une quelconque revendication précédente, dans lequel la densité relative de la structure en treillis est non uniforme sur toute la masse de tête (22).

9. Transducteur à piston (20) selon la revendication 8, dans lequel la densité du treillis change à travers la masse de tête (22).

10. Transducteur à piston (20) selon une quelconque revendication précédente, dans lequel les vides à l'intérieur de la structure en treillis contiennent ou sont remplis d'un matériau supplémentaire.

11. Matrice (30) de transducteurs à piston (20), dans laquelle chaque transducteur à piston (20) comprend les caractéristiques selon l'une quelconque des revendications 1 à 10.

12. Procédé de fabrication du transducteur à piston (20) selon l'une quelconque des revendications 1 à 10, le procédé comprenant :

la formation de la surface active de masse de tête (10), et
la formation de la structure en treillis par fabrication additive.

13. Procédé selon la revendication 12, dans lequel la surface active (10) de la masse de tête (22) est également formée par fabrication additive.

14. Procédé selon la revendication 13, dans lequel la surface active (10) et la structure en treillis sont formées en même temps ou séquentiellement.

15. Procédé selon la revendication 14, comprenant en outre une étape de remplissage ou de remplissage partiel des vides d'une cellule unitaire avec un matériau.

16. Procédé selon l'une quelconque des revendications 12 à 15, dans lequel le procédé de fabrication additive comprend au moins l'un parmi fusion laser sélective (SLM), fusion sur lit de poudre et dépôt direct de métal.

17. Procédé de fabrication du transducteur à piston (20) selon la revendication 13, le procédé comprenant en outre :

l'obtention d'un fichier électronique représentant une configuration d'un produit, y compris une configuration de surface ou une configuration volumique du produit, dans lequel le produit est la masse de tête ; et
la commande d'un appareil de fabrication additive pour fabriquer, en une ou plusieurs étapes de fabrication additive, le produit selon la configuration de surface spécifiée dans le fichier électronique.

18. Support lisible par ordinateur sur lequel sont stockées des instructions exécutables par ordinateur qui, lorsqu'elles sont exécutées par un processeur, amènent le processeur à commander un appareil ou un dispositif de fabrication additive pour fabriquer le transducteur à piston (20) selon l'une quelconque des revendications 1 à 10.

FIG. 1

FIG. 2

FIG. 3

FIG. 4

FIG. 5

EP 4 212 257 B1

FIG. 6

FIG. 7

FIG. 8

FIG. 9

FIG. 10

EP 4 212 257 B1

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011119730 A2

- EP 3432595 A1